**Europäisches Patentamt**

**European Patent Office**

**Office européen des brevets**

(19)

(11) Veröffentlichungsnummer : **0 012 372 B1**

## EUROPÄISCHE PATENTSCHRIFT

(12)

(45) Veröffentlichungstag der Patentschrift :
01.09.82

(21) Anmeldenummer : 79104962.0

(22) Anmeldetag : 06.12.79

(51) Int. Cl.³ : **B 65 D 85/08**, B 65 B 51/00, A 22 C 13/00

(54) **Funktionelle Einheit, umfassend einen Hohlstab aus längsweise gerafftem Schlauch mit den Hohlstab umgebender Stützhülle, Verfahren zu deren Herstellung sowie Verwendung der funktionellen Einheit bei der Wurstherstellung.**

(30) Priorität : 11.12.78 DE 2853400

(43) Veröffentlichungstag der Anmeldung :
25.06.80 (Patentblatt 80/13)

(45) Bekanntmachung des Hinweises auf die Patenterteilung : 01.09.82 Patentblatt 82/35

(84) Benannte Vertragsstaaten :
**BE DE FR**

(56) Entgegenhaltungen :
FR A 2 291 015

(73) Patentinhaber : **HOECHST AKTIENGESELLSCHAFT**
**Postfach 80 03 20**
**D-6230 Frankfurt/Main 80 (DE)**

(72) Erfinder : **Michel, Wolfgang**
**Am Hohen Stein 24**
**D-6200 Wiesbaden (DE)**
Erfinder : **Becker, Reinhold, Dr.**
**Am Hohen Stein 18**
**D-6200 Wiesbaden (DE)**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Imprimerie Jouve, 18, rue St-Denis, 75001 Paris, France

EP 0 012 372 B1

Funktionelle Einheit, umfassend einen Hohlstab aus längsweise gerafftem Schlauch mit den Hohlstab umgebender Stützhülle, Verfahren zu deren Herstellung sowie Verwendung der funktionellen Einheit bei der Wurstherstellung.

Die Erfindung betrifft eine funktionelle Einheit von der im Oberbegriff des Anspruchs 1 genannten Art, ein Verfahren zu ihrer Herstellung, das von einem Verfahren ausgeht, wie es im Oberbegriff des Anspruchs 4 beschrieben wird, und die Verwendung der funktionellen Einheit.

Unter Hohlstab ist ein aus längsweise gerafftem Schlauch bestehende hohlzylinderförmiger Körper zu verstehen. Als Stützhülle wird die aus formbarer Folie bestehende Umhüllung des Hohlstabs bezeichnet, sie weist die Gestalt eines hohlzylinderförmigen Behälters auf, dessen Hohlraum jeweils endseitig durch baulich eigenartig ausgestaltete integrale Stirnwände begrenzt ist.

Hohlstäbe dieser Art, insbesondere aus Cellulosehydrat, bevorzugt mit Faserverstärkung, werden insbesondere bei der Wurstherstellung verwendet. An einem Ende verschlossene Hohlstäbe werden dabei auf das Füllrohr einer Maschine zum Abfüllen von Wurstmasse geschoben ; durch Auspressen von Wurstmasse durch das Füllrohr in den Hohlraum des an einem Ende mit einem Endverschluß versehenen Hohlstabs wird der Hohlstab unter stetiger Entfältelung und entsprechender Verkürzung mit Wurstmasse gefüllt.

Vor dem Abfüllen von Wurstmasse werden die Hohlstäbe üblicherweise gewässert. Wasserfeuchte Hohlstäbe haben jedoch die Neigung, sich in längsaxialer Richtung erheblich auszudehnen, wobei ihre Formbeständigkeit nicht mehr in erwünschtem Maße gegeben ist, was zu Schwierigkeiten bei ihrer Handhabung führt.

In der DE-A 25 10 637 ist ein mit einer Stützhülle ummantelter Hohlstab aus längsweise geraffter Schlauchhülle beschrieben. Die Stützhülle ist zweiteilig aus einer Schlauchhülle und formfesten Ringelementen zur Fixierung der Schlauchhülle am Hohlstab, jeweils als Abschluß der Stützhülle, aufgebaut. Diese Stützhülle hat jedoch den Nachteil, daß ihre Umstülpungen relativ lang sein müssen, um, insbesondere im wasserfeuchten Zustand, die Möglichkeit unerwünschter Lockerung der Stützhülle zu vermeiden.

Der Erfindung liegt deshalb die Aufgabe zugrunde, eine einheitlich handhabbare funktionelle Einheit aus einem Hohlstab und diesen umgebender Stützhülle vorzuschlagen, bei deren bestimmungsgemäßer Verwendung ein Endabschnitt des den Hohlstab bildenden gerafften Schlauchs einfach erfaßbar und unter Entfältelung aus der Stützhülle herausziehbar ist, ohne daß dabei die Gefahr der Beschädigung des Schlauchs besteht.

Die der Erfindung zugrundeliegende Aufgabe wird durch eine einheitlich handhabbare funktionelle Einheit mit den im Anspruch 1 genannten Merkmalen gelöst. Sie wird ferner gelöst durch das im Anspruch 4 angegebene Verfahren und die im Anspruch 9 beschriebene Verwendung.

Die Unteransprüche geben weitere Ausbildungen der funktionellen Einheit und des Verfahrens an.

Die als Endabschlüsse des Hohlraumes der Stützhülle wirkenden Stirnwände sind in Gestalt von unter Verdrillung und längsweiser in Richtung auf die Hohlstabenden zusammengepreßter, sich teilweise überlappender formpermanenter Folienfalten mit zentraler Öffnung ausgebildet und werden nachfolgend als formpermanente Stützhüllenverdrillungen bezeichnet.

Die Raumform der formpermanenten Stützhüllenverdrillungen entsteht, wenn man die bevorzugt gleichlangen Überstände eines geraden, im Querschnitt kreisförmigen Schlauchhüllenstücks aus formbarer Folie, in dessen Hohlraum der damit zu umhüllende Hohlstab angeordnet ist, jeweils um ihre Längsachsen als Drehachsen derart um wenigstens 30° verdrillt, daß sich dabei in den Endabschnitten der Schlauchhülle jeweils umfänglich Folienfalten mit helixförmig verlaufender Kante ausbilden und die Folienfalten an beiden Enden eine zentrale Öffnung in den Stirnwänden als Durchgang freilassen, sodann die durch die Verdrillung entstandenen Folienfalten unter zugleicher Aufrechterhaltung der zentralen Öffnungen an den beiden Enden zusammenpreßt und dabei überlappt und dann die zusammengepreßten, teilweise überlappenden Folienfalten durch formfixierende Maßnahmen in formpermanenten Zustand überführt.

Die Richtung der Zusammenpressung ist parallel zur Längsachse der Stützhülle.

Die längsweise Zusammenpressung der nach außen wegragenden, längsaxialen verdrillten Endabschnitte erfolgt dabei jeweils in Richtung auf die Stirnseiten des im Hohlraum der Stützhülle angeordneten Hohlstabs, wobei diese als Widerlager dienen.

Der Innendurchmesser der formpermanenten Stützhüllenverdrillungen bzw. der zentralen Öffnungen der Stirnwände ist geringer als der übrige Teil der Stützhülle und geringer als der Außendurchmesser des Hohlstabes. Die erfindungsgemäß ausgebildeten Stirnwände gewährleisten somit die Form- und Lagefixierung des Hohlstabs im Stützhüllenhohlraum und zugleich die Entnehmbarkeit von entfältelter Schlauchhülle aus dem Stützhüllenhohlraum durch die zentralen Öffnungen der Stirnwände.

Die Stirnwandaußenseiten können kreisringförmige Folienumstülpungen aufweisen, die durch Umbiegen der mündungsnahen Öffnungsbereiche der längsaxial verdrillten und längsweise zusammengepreßten Hüllenüberstände nach außen und Befestigen der Umstülpungen mit ihrer Unterlage durch Verschweißung gebildet sind.

Das Ausmaß der längsaxialen Verdrillung der Schlauchhüllenüberstände bedingt die Breite sowie die Dicke der Stirnwandflächen sowie den Durchmesser der zentralen Öffnungen der Stirnwände.

Die zentralen Öffnungen der Stützhüllenstirnwände werden durch eine Vielzahl von Folienkanten umgrenzt, wobei diese sich jeweils in Ebenen erstrecken, mit denen die Längsachse der Stützhülle jeweils einen rechten Winkel bildet ; die Stützhüllenstirnwände bestehen aus einer Vielzahl sich jeweils teilweise überlappender Folienfalten.

Der in der Beschreibung und in den Ansprüchen verwendete Ausdruck « formpermanent » soll zum Ausdruck bringen, daß die Gestalt bzw. bauliche Ausbildung der Folienfalten der Stützhülle sich nicht von selbst zu ändern vermag.

Die behälterartige Stützhülle bewirkt die Formfixierung des in ihrem Hohlraum angeordneten Hohlstabs, in dem sie durch die Funktion der Stirnwände dessen unerwünschte Längsausdehnung und Formänderung — insbesondere nach Wässerung des Hohlstabs in der Stützhülle — verhindert. Die zentrale Öffnung an der Stirnwand erlaubt einfache Entnahme des Hohlstabs, wobei er gleichzeitig entfaltet wird.

Der Mantel der Stützhülle bzw. des Hüllenstücks, aus dem die Stützhülle herstellbar ist, weist einen im Querschnitt kreisförmigen Hohlraum auf, dessen Durchmesser dem Hohlstabaußendurchmesser angepaßt ist.

Die Stützhülle bzw. das Hüllenstück besteht aus formbarer Folie. Die Bezeichnung « formbare Folie » soll definitionsgemäß flexible Folien aus thermoplastischem, verschweißbarem Polymerisat — insbesondere Polyvinylchlorid, bevorzugt jedoch Polyethylen — als auch hinreichend dünner Metallfolie, insbesondere Aluminiumfolie, umfassen. Stützhüllen aus synthetischem, thermoplastischem Polymerisat sind besonders bevorzugt. Der Begriff « formbare Folie » umfaßt definitionsgemäß auch netzartig ausgebildete Schläuche, beispielsweise Netzschläuche auf Polyethylenbasis.

Die behälterartige Stützhülle ist einstückig und umfaßt einen geraden, hohlzylinderförmigen Mantel, dessen Hohlraum jeweils endseitig durch mit der Stützhülle integrale, baulich-strukturell eigenartig ausgebildete Stirnwände mit zentralen Öffnungen begrenzt ist.

Die Stirnwände sind jeweils bevorzugt von gleicher raumförmlicher Ausbildung und vorteilhaft jeweils gleich dimensioniert.

Die zentralen Öffnungen der Stirnwände sind in Gestalt und Abmessung bevorzugt gleich dimensioniert ausgebildet und zwar in der Weise, daß bei bestimmungsgemäßer Verwendung der funktionellen Einheit durch die Öffnung in der Stirnwand der Stützhülle das Füllrohr einer Abfüllmaschine für Füllgut leicht in den Hohlstabhohlraum einführbar ist. Zugleich sind die Stirnwände derart ausgebildet, daß sie Lage- und Formfixierung des Hohlstabs im Stützhüllenhohlraum gewährleisten. Die zentralen Öffnungen der Stirnwände sind derart zueinander angeordnet, daß ihre Mittelpunkte auf einer Geraden liegen, deren Verlauf der Hohlstablängsachse entspricht.

Die Innenseite des Stützhüllenmantels grenzt entweder unmittelbar an die Hohlstabaußenseite an oder verläuft dazu in geringem Abstand. Die Länge des Stützhüllenmantels entspricht wenigstens der Hohlstablänge ; sofern eine bestimmte Längsausdehnung des wasserfeuchten Hohlstabs aus Cellulosehydratschlauch — als Ergebnis der Wässerung der funktionellen Einheit vor ihrer bestimmungsgemäßen Verwendung — erwünscht ist, kann die Länge des Stützhüllenmantels dementsprechend angepaßt werden. Der Mantel der Stützhülle weist bevorzugt eine Vielzahl von Durchbrüchen auf, die vorteilhaft von gleicher Gestalt und gleicher Abmessung sind. Es ist besonders zweckmäßig, wenn die Durchbrüche gleichmäßig über die gesamte Länge und den Umfang des Stützhüllenmantels verteilt vorgesehen sind. Die Durchbrüche erlauben eine schnellere Durchtränkung des Hohlstabs im Stützhüllenhohlraum mit Bewässerungsflüssigkeit bei der bestimmungsgemäßen Verwendung der funktionellen Einheit. Die Anzahl, Form und Abmessung der Durchbrüche im Stützhüllenmantel sind derart zu wählen, daß die form- und lagefixierte Funktion dadurch nicht gemindert wird.

Die Wanddicke der Stützhülle ist nicht wesentlich, sofern durch sie die angestrebte Eigenschaft der Stützhülle sowie ihre Schutzfunktion nicht nachteilig beeinflußt wird. Sofern die Stützhülle in bevorzugter Ausführungsform aus Polyethylenfolie besteht, hat diese vorteilhaft eine Dicke im Bereich zwischen 100-250 µm.

Nachfolgend wird beispielhaft ein Verfahren beschrieben, nach dem die erfindungsgemäße funktionelle Einheit herstellbar ist.

Im Hohlraum eines Hohlstabs aus längsweise gerafftem Schlauch, beispielsweise eines Schlauchs auf Basis von faserverstärktem Cellulosehydrat, wird ein gerader, formfester Dorn als Stützelement angeordnet, dessen Länge derart bemessen ist, daß er aus dem Hohlstabhohlraum beidseitig hinreichend weit herausragt.

Um den Hohlstab wird dann eine hohlzylindrische Hülle aus formbarer Folie angeordnet — beispielsweise aus Polyethylen —, deren Länge derart bemessen ist, daß ihre Endabschnitte jeweils hinreichend weit über die Hohlstabenden hinausragen, wobei diese Hüllenüberstände jeweils bevorzugt gleich lang sind und ihre Innendurchmesser dem Hohlstabaußendurchmesser angepaßt sind.

Mittels zangenartig ausgebildeter Greifwerkzeuge werden die Enden Hüllenüberstände, die beispielsweise eine Länge aufweisen, die dem Dreifachen des Hüllendurchmessers entspricht, ergriffen. Durch entsprechendes Drehen der Werkzeuge werden die Hüllenüberstände um ihre Längsachse als Drehachse beispielsweise um 30° verdrillt.

Die zangenartigen Werkzeuge werden danach als Stempelwerkzeuge benutzt, mit dem die verdrillten Hüllenüberstände längsweise in Richtung auf die Hohlstabenden und gegen diese als Widerlager gepreßt werden. Die verdrillten und danach längsweise zusammengepreßten Hüllenüberstände werden dann in formpermanenten Zustand übergeführt.

Zur formpermanenten Fixierung der verdrillten Hüllenüberstände werden bei bevorzugter Verwendung einer Schlauchhülle aus warmformbarer Folie aus verschweißbarem Polymerisat, beispielsweise einer Folie aus Polyethylen, die Hüllenüberstände zunächst jeweils mit Wärme beaufschlagt, deren Temperatur hinreicht, um sie in warmformbaren und verschweißbaren Zustand überzuführen, danach in warmformbarem Zustand um ihre Längsachse als Drehachse verdrillt und unmittelbar darauf längsweise zusammengepreßt. Die verdrillten und zusammengepreßten Hüllenüberstände werden dann unter ihre Form erhaltenden Bedingungen abgekühlt, z.B. indem man ihre Form mit Hilfe des zangenartigen Werkzeugs aufrechterhält. Es wird soweit abgekühlt, daß nach Entlastung der auf sie von außen wirkenden Kraft ihre Gestalt und Ausbildung bei Raumtemperatur beständig ist. Die Abkühlung kann beispielsweise dadurch erfolgen, daß man die Stirnwände mit Kaltluft anbläst.

Bei der geschilderten Verfahrensweise ist es zweckmäßig, den Hohlstab und die ihn umgebende Schlauchhülle in einer Haltevorrichtung in bevorzugt horizontaler Lage anzuordnen. Während der Verfahrensdurchführung kann im Hohlraum des Hohlstabs ein Stützdorn angeordnet sein, dessen Länge derart bemessen ist, daß er wenigstens so lang wie das den Hohlstab umgebende Hüllenstück ist.

Bei bevorzugter Verwendung von flexiblen Schlauchhüllen aus thermoplastischem Kunststoff, insbesondere aus Polyethylen, zur Herstellung der Stützhülle, ist es zur Ausbildung formpermanenter Falten erforderlich, daß nach deren Bildung die ihnen jeweils zugeordneten Flanken fest miteinander verbunden werden.

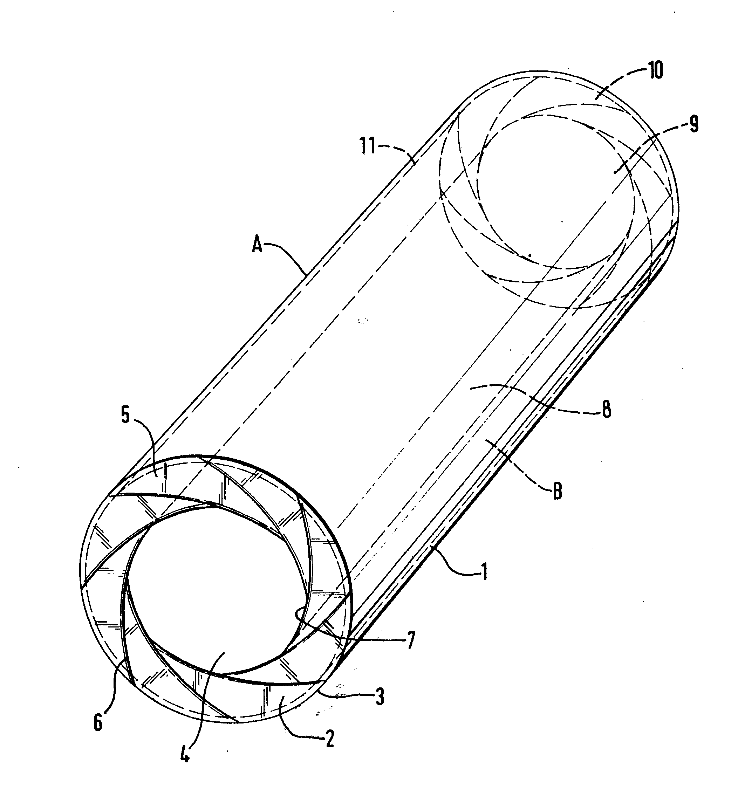

Die Erfindung wird durch die Zeichnung erläutert. In der einzigen Figur wird eine perspektivische Darstellung des Gegenstands der Erfindung in seitlicher Ansicht gezeigt.

A bedeutet dabei die Stützhülle und B ein Hohlstab im Hohlraum 8 der Stützhülle A.

Die Stützhülle A besteht aus einem holzylinderförmigen Mantel 1 und einer integralen Stirnwand 2 in formpermanenter Ausbildung, welche eine zentrale Öffnung 4 und überlappende Falten 5 aufweist.

Der Hohlstab B besitzt einen Hohlraum 8, Mündungsöffnungen 9, Stirnflächen 10 und eine Außenseite 11.

## Ansprüche

1. Funktionelle Einheit, bestehend aus einer hohlzylinderförmigen Stützhülle (A) aus formbarer Folie mit integralen Stirnwänden (2) und zentraler Öffnung (4) in den Stirnwänden (2) und einem Hohlstab (B) aus einem längsweise gerafften Schlauch im Stützhüllenhohlraum, wobei die Stützhülle (A) den Hohlstab (B) unter Freilassung seiner Hohlraummündungsöffnung (9) umgibt, dadurch gekennzeichnet, daß die Stirnwände (2) als unter Verdrillung und längsweise in Richtung auf die Hohlstabenden (10) zusammengepreßte, sich teilweise überlappende formpermanente Folienfalten (5) mit zentraler Öffnung (4) ausgebildet sind.

2. Funktionelle Einheit nach Anspruch 1, dadurch gekennzeichnet, daß die Stützhülle aus Polyethylen besteht.

3. Funktionelle Einheit nach Anspruch 1 oder 2, dadurch gekennzeichnet, daß die Folienfalten (5) untereinander in fester Verbindung stehen.

4. Verfahren zur Herstellung einer funktionellen Einheit nach einem der Ansprüche 1 bis 3, bei dem man um einen Hohlstab (B) aus längsweise gerafftem Schlauch eine zylindrische Hülle (A) aus formbarer Folie anordnet, wobei die Hülle (A) in ihrer Länge derart bemessen ist, daß sie beidseitig über die Hohlstabenden hinausragt, und die Hüllenüberstände in Hüllenverschlußelemente mit Öffnung umwandelt, dadurch gekennzeichnet, daß man die Hüllenüberstände verdrillt, die dadurch gebildeten Folienfalten (5) längsweise in Richtung auf die Hohlstabenden zusammenpreßt und die dabei gebildeten, teilweise sich überlappenden Folienfalten (5) mit zentraler Öffnung (4) in den formpermanenten Zustand überführt.

5. Verfahren nach Anspruch 4, dadurch gekennzeichnet, daß man die Hüllenüberstände um 30° um ihre Längsachse als Drehachse verdrillt.

6. Verfahren nach Anspruch 4 oder 5, dadurch gekennzeichnet, daß die Stützhülle aus warmformbarem, verschweißbarem Polymerisat besteht.

7. Verfahren nach Anspruch 6, dadurch gekennzeichnet, daß die Stützhülle aus Polyethylen besteht.

8. Verfahren nach einem der Ansprüche 4 bis 7, dadurch gekennzeichnet, daß man die Folienfalten miteinander verschweißt.

9. Verwendung einer funktionellen Einheit nach einem der Ansprüche 1 bis 3 bei der Wurstherstellung.

## Claims

1. A functional unit, comprising a hollow cylindrical support sheath (A) of formable sheet material with integral end walls (2) and a central opening (4) in these, and a hollow rod (B) of longitudinally shirred tubing arranged in the cavity of the support sheath, the support sheath (A) surrounding the hollow rod (B) while leaving the open end (9) of the hollow rod free, wherein the end walls (2) are constructed as partially overlapping, permanently shaped folds (5) of sheet material formed by twisting and longitudinally compressing in the direction of the ends (10) of the hollow rod, while leaving a central opening (4).

2. A functional unit according to claim 1, wherein the support sheath is made of polyethylene.

3. A functional unit according to claim 1 or claim 2, wherein the folds (5) of sheet material are firmly joined to one another.

4. A process for producing a functional unit according to any of claims 1 to 3, in which a cylindrical sheath (A) of formable sheet material is arranged around a hollow rod (B) of longitudinally shirred tubing, the sheath (A) being of such a length that its ends project beyond the ends of the hollow rod and the projecting ends of the sheath are converted into sheath closing elements with an opening, wherein the projecting ends of the sheath are twisted, the folds (5) of sheet material thus formed are longitudinally compressed in the direction of the ends of the hollow rod and the resulting partially overlapping folds (5) of sheet material with a central opening (4) are converted into a permanently shaped state.

5. A process according to claim 4, wherein the projecting ends of the sheath are twisted about their longitudinal axis by 30°.

6. A process according to claim 4 or claim 5, wherein the support sheath is made of a hot-formable, fusible polymer.

7. A process according to claim 6, wherein the support sheath is made of polyethylene.

8. A process according to any of claims 4 or 7, wherein the folds of sheet material are fused to one another.

9. Use of a functional unit according to any of claims 1 to 3 in the production of sausages.

**Revendications**

1. Unité fonctionnelle composée d'une gaine tubulaire creuse (A) réalisée dans une feuille déformable et comportant des parois frontales intégrales (2) et une ouverture centrale (4) ménagée dans les parois frontales (2), ainsi que d'une tige creuse (B) réalisée dans un boyau plissé dans le sens longitudinal logé dans la cavité de la gaine tubulaire, afin que la gaine tubulaire (A) enrobe la tige creuse (B), à l'exception de l'ouverture de l'embouchure (9), caractérisée en ce que les parois frontales (2) sont constituées de plis permanents (5) torsadés et comprimés en direction des extrémités (10) de la tige creuse, en se recouvrant partiellement autour d'une ouverture centrale (4).

2. Unité fonctionnelle selon la revendication 1, caractérisée en ce que la gaine tubulaire est en polyéthylène.

3. Unité fonctionnelle selon l'une des revendications 1 ou 2, caractérisée en ce que les plis (5) sont reliés fixement entre eux.

4. Procédé de fabrication d'une unité fonctionnelle selon l'une des revendications 1 à 3, qui consiste, d'une part, à enrober une tige creuse (B), réalisée à partir d'un boyau plissé dans le sens longitudinal, d'une gaine tubulaire (A) réalisée dans une feuille déformable et dimensionnée de manière qu'elle dépasse, dans le sens de la longueur, les deux extrémités de la tige creuse, et, d'autre part, à transformer les parties en porte-à-faux de la gaine en éléments de fermeture comportant une ouverture, caractérisé en ce que les parties en porte-à-faux sont torsadées, puis les plis (5) qui en résultent sont comprimés dans le sens longitudinal et poussés en direction des extrémités de la tige creuse, et en ce que, finalement, les plis (5) se recouvrant partiellement autour d'une ouverture centrale (4) sont traités en vue d'assurer leur maintien dans une position permanente.

5. Procédé selon la revendication 4, caractérisé en ce que les parties en porte-à-faux de la gaine sont torsadées sur 30° autour de leur axe longitudinal, devenu axe de rotation.

6. Procédé selon l'une des revendications 4 ou 5, caractérisé en ce que la gaine tubulaire est réalisée dans un polymère thermoplastique se prêtant au soudage.

7. Procédé selon la revendication 6, caractérisé en ce que la gaine tubulaire est en polyéthylène.

8. Procédé selon l'une des revendications 4 à 7, caractérisé en ce que les plis des parties en porte-à-faux sont soudés entre eux.

9. Utilisation d'une unité fonctionnelle définie dans l'une des revendications 1 à 3 pour la fabrication des saucisses.